# EUROPEAN PATENT SPECIFICATION

(11) **EP 2 805 228 B1**
(45) Date of publication and mention of the grant of the patent: **07.09.2016**
(21) Application number: 13719371.0
(22) Date of filing: 21.01.2013
(51) Int. Cl.: G06F 7/00

(54) **METHOD FOR PROTECTION FROM ACTIVE ATTACKS AND DEVICE USING THE METHOD**
VERFAHREN ZUM SCHUTZ VOR AKTIVEN ANGRIFFEN UND VORRICHTUNG ZUR DURCHFÜHRUNG DES VERFAHRENS
PROCÉDÉ DE PROTECTION CONTRE DES ATTAQUES ET DISPOSITIF UTILISANT CE PROCÉDÉ

(30) Priority: 20.01.2012 FR 1200174
(43) Date of publication of application: 26.11.2014
(73) Proprietor: Cassidian Cybersecurity SAS, 78990 Elancourt (FR)
(72) Inventor: FRANCQ, Julien, F-78210 Saint Cyr L'Ecole (FR); THUILLET, Céline, F-78960 Voisins Le Bretonneux (FR)
(74) Representative: Cabinet Camus Lebkiri
(86) International application number: PCT/EP2013/000173
(87) International publication number: WO 2013/120576

(56) References cited:
- Amir Moradi ET AL: "From Fault Tolerance to Fault Attack Tolerance in the Implementations of Advanced Encryption Standard", The CSI Journal on Computer Science and Engineering, Vol. 4, No. 2&4, 2006, 1 January 2006 (2006-01-01), pages 32-38, XP055040127, Retrieved from the Internet: URL:http://www.jcse.ir/Contents/vol4no24/5 New.pdf [retrieved on 2012-10-05]
- WU K ET AL: "Concurrent error detection of fault-based side-channel cryptanalysis of 128-bit RC6 block cipher", MICROELECTRONICS JOURNAL, MACKINTOSH PUBLICATIONS LTD. LUTON, GB, vol. 34, no. 1, 1 January 2003 (2003-01-01), pages 31-39, XP004404368, ISSN: 0026-2692, DOI: 10.1016/S0026-2692(02)00126-X
- ANANDI REDDY S ET AL: "Efficient fault detection scheme for reliable AES architecture", EMERGING TRENDS IN ELECTRICAL AND COMPUTER TECHNOLOGY (ICETECT), 2011 INTERNATIONAL CONFERENCE ON, IEEE, 23 March 2011 (2011-03-23), pages 1004-1009, XP031863051, DOI: 10.1109/ICETECT.2011.5760266 ISBN: 978-1-4244-7923-8

## Description

### Field of the invention

This invention generally relates to a method for protection from active attacks and the device using said method. More particularly, the invention is aimed at proposing a method for protecting the processing of sensitive data in a device from active attacks.

### Background of the invention and technical problems encountered

In general, while implementing cryptographic primitives in a cryptographic system, it is necessary to take account of and prevent attempts to fraudulently extract sensitive data such as the encryption key. Such attempts may be made through physical attacks involving analysing the information from the cryptographic system and inferring the sensitive data from it. There are two categories of physical attacks: passive attacks and active attacks.

Passive physical attacks, which are also called SCAs (Side Channel Attacks), do not require any direct interaction with the cryptographic system. An attacker merely observes the characteristics of the cryptographic circuit in operation and infers the sensitive information. Indeed, there is a correlation between the data processed by the system and characteristics of said system such as power consumption, electromagnetic emanations, computation time etc. Analysing these correlations can make it possible to retrieve sensitive information such as encryption keys.

Active physical attacks consist in disrupting the normal working of the circuit by applying a fault using an outside source such as a light source (white light, laser beam), a magnetic source, a source of heat etc. Active attacks, such as glitch attacks, consist in modifying certain input signals of the system such as the power voltage of the system or it clock frequency. The attacker can thus potentially retrieve the cryptographic results corrupted in reaction to the attacks. The sensitive information of a cryptographic system is determined by analysing the differences between a normal result supplied by the system and a result corrupted by an attack.

A known counter-measure against active attacks consists in duplicating the same encryption operation. However, that technique is vulnerable, both during an active attack and during a passive attack. That is because if the encryption duplication is carried out in parallel, the working power of the circuit is doubled. The noise-to-signal ratio is easily observable and usable by an attacker. If duplication is carried out in series, the attacker can make an active attack at two possible times.

That is why there is a need to prevent both active attacks and passive attacks during operations on sensitive data in a processing device.

### Summary of the invention

One aim of the invention is to protect the sensitive data processing device from possible active attacks, and also to take account of the behaviour of the processing device to prevent passive attacks.

The invention thus provides a method for protecting the processing of sensitive data implemented by a processing device intended for processing sensitive input data in order to obtain sensitive output data, wherein data processing is divided into at least two processing functions. The method comprises the following:
- application of a first function to the sensitive input data to obtain first intermediate data,
   and also comprises the three following recurring steps for each successive application of each of the following functions:
- application of the subsequent function to the intermediate data obtained earlier by applying a previous function, to obtain subsequent intermediate data,
- simultaneously with the application of the following function, detection of an attack by verifying the accuracy of the previously obtained intermediate data, and
- infection of the subsequently obtained intermediate data if an attack is detected,
the following intermediate data obtained by applying the subsequent last function are the sensitive output data with an accurate or infected value.

The invention offers the benefit of protecting a sensitive data processing device from both active attacks and passive attacks. That is because the execution of each step of application of a subsequent function simultaneously with the execution of an attack detection step makes it difficult for an attacker to make an active attack precisely. An active or a passive attacker cannot easily isolate the execution of each step of processing of the sensitive data. Further, the step of detecting an attack after each application of a processing function makes it possible to detect an active attack more rapidly.

The invention makes it possible to minimise the information to give to an attacker thanks to the output data infection step after an attack is detected. The attacker cannot correlate the infected sensitive output data with a particular working of the device.

The invention also comprises any of the following characteristics:
- a last step of detection of an attack by analysing the last subsequent intermediate data obtained by applying the last subsequent function and an infection of the latest subsequent intermediate data obtained if an attack is detected;
- the step of detection of an attack comprises an application of an inverse function of the previous function, the inverse function being applied to the intermediate data earlier obtained to obtain a result, and a comparison of the result obtained with the data before the application of the previous function, wherein an attack is detected if the result obtained and said data are not identical;
- the step of infection of the subsequent intermediate data comprises the replacement of the value of the subsequent intermediate data with a random value or a null value;
- or the step of infection of the subsequent intermediate data comprises an exclusive OR logical operator to be applied to the subsequent intermediate data with a random value;
- the step of infection of the subsequent intermediate data comprises replacement of the value of the secret data to later apply to subsequent intermediate data, with a random value or a null value; and
- an application of a dummy function to the last subsequent intermediate data, simultaneously with a last detection of an attack by analysing the last subsequent intermediate data.

The invention is also aimed at a processing device implementing a method for protecting the processing of sensitive data, intended for processing sensitive input data in order to obtain sensitive output data, wherein data processing is divided into at least two processing functions. The device comprises the following:
- a processing entity for successively applying the processing functions from sensitive input data, and obtaining the sensitive output data after applying the last processing function,
- a protection entity for detecting an attack simultaneously with each application of a processing function, and infecting the data resulting from the application of each processing function if an attack is detected.

### Brief description of figures

The invention will become easier to understand in the description below and the figures accompanying it. The figures are presented for illustration only and are not limitative in any way. The figures illustrate the following:
- figure 1 is a schematic representation of a cryptographic device according to the invention; and
- figure 2 is a functional diagram of a method for protection from invasive attacks according to the invention.

### Description of the invention

It must be noted that the figures are not to scale.

The following embodiments are examples. Even though the description refers to one or more embodiments, which does not necessarily mean that each reference relates to the same embodiment or that the characteristics apply to only one embodiment. Simple characteristics of the different embodiments can also be combined to supply other embodiments.

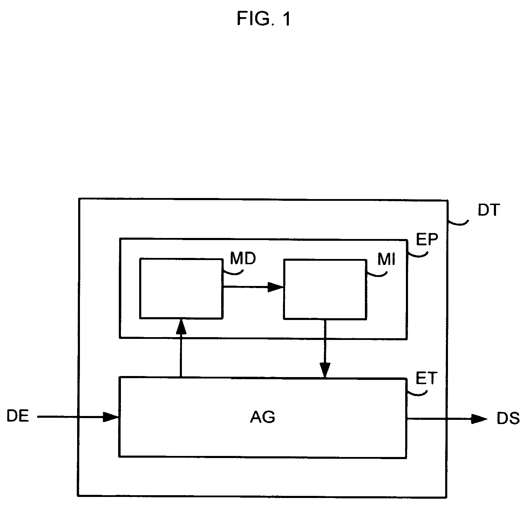

Figure 1 represents a processing device DT according to the invention. Processing device DT means a device comprising a processing entity ET capable of applying to sensitive input data DE an algorithm AG for processing said sensitive input data according to secret data to obtain sensitive output data DS. The input data DE may be data to encrypt or decrypt. The output data DS may be encrypted or decrypted data. The secret data may be encryption and/or decryption keys, authentication keys or other keys. The processing device DT according to the invention also comprises a protective entity EP capable of protecting the processing entity ET during its working against all non-invasive attacks. The protective entity EP comprises a detecting module MD that detects potential active attacks, an infecting module MI for infecting the output data DS if an active attack is detected.

The different entities and modules listed above may be hardware or functional elements, such as programs saved in one or more memory units and executed by a processing unit. The memory units and processing unit form integral part of the processing device. Such memory and processing units are known to the person of the art and are not covered by this invention. A more detailed description of these units is thus not necessary.

The processing device DT may be a microcontroller with a programmable memory or a dedicated special integrated circuit.

The algorithm AG for processing sensitive data may be a secret key authentication algorithm of the AKA (Authentication and Key Agreement) type. The algorithm AG for processing sensitive data may be a cryptographic algorithm that can encrypt or decrypt the sensitive data, for example encryption and/or decryption of the AES (Advanced Encryption Standard, FIPS 197) type or block encryption or public key encryption such as RSA (Rivest Shamir Adleman) or ECC (Elliptic Curve Cryptography). The algorithm for processing sensitive data has the characteristic of being composed of at least two processing functions f and g to be executed successively. Thus, the output data DS normally obtained by the algorithm AG depending on the input data DE are obtained according to the following equation: DS = g°f(DE).

In one example, the processing algorithm AG may be a cryptographic algorithm of a known AES type, divided into four known processing functions: function f = AddRoundkey, function g = SubBytes, function h = ShiftRows and function z = MixColumns. The four functions are executed successively by the processing entity. The division of the AES algorithm may be different and may for example comprise two processing functions: function f = SubBytes°AddRoundkey and function g = MixColumns ° ShiftRows.

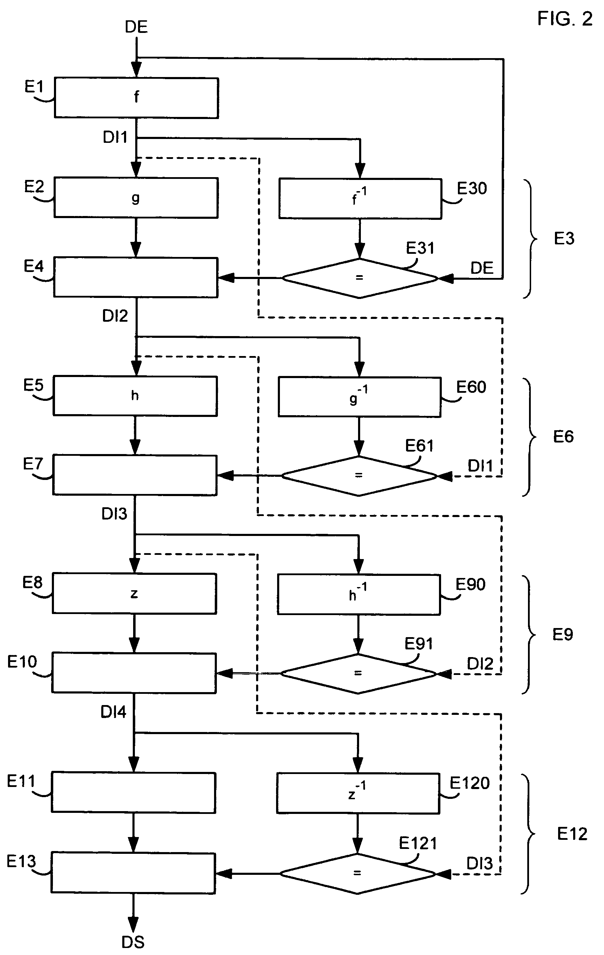

The functional diagram in figure 2 represents the steps of the method in the invention. The example of the processing algorithm AG taken is an algorithm comprising four functions f, g, h and z which are executed successively.

In step E1, the processing entity ET applies the first function f to the input data DE to obtain the first intermediate data DI1.

In step E2, the processing entity ET applies the second function g to the first intermediate data DI1 to obtain the second intermediate data DI2.

In step E3, which is simultaneous with the step E2, the protective entity EP, and more particularly the detecting module MD, verifies if the first intermediate data obtained DI1 are accurate. The verification E3 comprises two successive sub-steps E30 and E31. During a first sub-step E30, the detecting module MD applies to the first intermediate data D11 a first inverse function f⁻¹ of the first function f applied earlier. During the second sub-step E31, the module MD compares the result obtained with the input data DE, which are the data before the application of the first function f.

In step E4, if the intermediate data DI1 are accurate, that is to say if the data DE and the result obtained by applying the inverse function f⁻¹ are identical, then the second intermediate data DI2 are not modified and the processing entity ET directly executes the step E5.

If on the other hand, in step E4, the first intermediate data DI1 are inaccurate, an active attack is detected. In that case, the protective entity EP, more particularly infecting module MI, infects the value of the second intermediate data DI2. An infection consists in replacing the value of the data by a random value from a random source comprised in the processing device. As an alternative, the infecting module MI can add a random variable to the corrupted intermediate data by applying an exclusive OR logical operator. In another alternative, if the processing device DT does not comprise a random source, the infecting module MI replaces the value of the data with a null value. The infection step is aimed at de-correlating the processing functions carried out earlier from the intermediate data obtained. Thus, an attacker obtains a result comprising unusable information. After the second intermediate data DI2 are infected, the processing entity ET executes the following step E5 using the infected intermediate data DI2. The method does not stop as soon as an active attack is detected so as to not inform the attacker who is observing it that an attack has been detected and that the sensitive output data are compromised.

In one alternative, after a detection of an attack, the infecting module also can infect secret data used in the following function to apply. Thus the secret data can be replaces by a random value or a null value. A double infection occurs on intermediate data and secret data.

The execution of steps E2 to E4 is repeated in steps E5 to E7 and E8 to E10 for processing each function not as yet processed, h, z and for verifying the data output from each previously applied function g, h.

Thus, the steps E5, E6 and E7, relating to the processing of the third function h, respective concern the following:
- application step E5 of the third function h to the second intermediate data DI2 obtained earlier with an accurate or infected value, in order to obtain third intermediate data DI3,
- detection step E6, simultaneously with the previous step E5, to verify the accuracy of the second intermediate data DI2 previously obtained by applying (E60) the inverse function g⁻¹ of the function g and by comparing (E61) the value obtained with the value of the first intermediate data DI1, and
- infection step of the third intermediate data DI3 if the second intermediate data DI2 previously obtained are found to be inaccurate.

Similarly, the steps E8, E9 and E10, relating to the processing of the fourth function z, respectively concern the following:
- application step E8 of the fourth function z to the third intermediate data DI3 obtained earlier with an accurate or infected value, in order to obtain fourth intermediate data DI4,
- detection step E9, simultaneously with the previous step E8, to check the accuracy of the third intermediate data DI3 previously obtained by applying (E90) the inverse function h⁻¹ of the function h and by comparing (E91) the value obtained with the value of the second intermediate data DI2, and
- infection step of the fourth intermediate data DI4 if the third intermediate data DI3 previously obtained are found to be inaccurate.

The recurrence of execution of simultaneous steps for processing a function and for verifying the data obtained by applying the previous processing function may be executed as many times as the algorithm comprises successive processing functions. Thus, the method in the invention makes it possible to verify, one function after another, the accuracy of the intermediate results throughout the processing and thus detect very rapidly if an active attack has taken place. Similarly, the simultaneous execution of the processing and detection steps makes it possible to conceal the exact internal working of the processing device from an external observer who wants to passively attack the device. Such recurrence also makes it possible to protect all the processing, detection and infection steps.

One of the purposes of the invention is to minimise the information to supply passively to an outside observer. Thus, to maintain the homogeneous working of the processing device, during the step E12 (E120, E121) for detection by verifying the accuracy of the last data obtained by applying the last function (z) of the processing algorithm, a step E11 for the application of a dummy function to the last data obtained may be added simultaneously to the step E12. The dummy function is a function that does not modify the value of the data to process. The detection step E12 comprises behaviour identical to detection steps E3, E6 and E9. Depending on the result of the detection E12, in step E13, the infecting module replaces or does not replace the value of the data processed in step E11. The recurrence of processing and attack detection is maintained. The last data obtained by applying the last function are the sensitive output data DS with an accurate or infected value.

The dummy function makes it possible to prevent an outside observer, attacking the device passively, detecting a difference in working of the treatment device.

If the processing algorithm is to be divided, a dummy step may be added simultaneously with the verification of the data obtained during the application of the last function of the processing algorithm.

In one alternative, for protection from passive attacks, other dummy steps may be added regularly after processing steps. These dummy steps have a predetermined duration to allow the desynchronising of the processing carried out on sensitive data.

## Claims

1. Method for protecting a processing (AG) of sensitive data implemented by a processing device (DT) intended for processing sensitive input data (DE) in order to obtain sensitive output data (DS), wherein data processing is divided into at least two processing functions (f, g, h, z), the method comprising :
- an application (E1) of a first function (f) to the sensitive input data (DE) to obtain first intermediate data (DI1),
and also comprising the three following recurring steps for each successive application of each of the following functions (g, h, z):
- an application (E2, E5, E8) of the subsequent function (g, h, z) to the intermediate data (DI1, DI2, DI3) obtained earlier by applying a previous function (f, g, h), to obtain subsequent intermediate data (DI2, DI3, DI4),
- simultaneously with the application of the following function, a detection (E3, E6, E9) of an attack by verifying the accuracy of the previously obtained intermediate data (DI1, DI2, DI3, and
- an infection (E4, E7, E10) of the subsequently obtained intermediate data (DI2, DI3, DI4) if an attack is detected,
the following intermediate data obtained by applying the subsequent last function are the sensitive output data (DS) with an accurate or infected value.

2. Method according to claim 1, comprising a last step (E12) of detection of an attack by analysing the last subsequent intermediate data obtained (DI4) by applying the last subsequent function (z) and an infection (E13) of the latest subsequent intermediate data (DI4) obtained if an attack is detected.

3. Method according to claim 1 or 2, wherein the step (E3, E6, E9, E12) of detection of an attack comprises:
- an application (E30, E60, E90, E120) of an inverse function (f⁻¹, g⁻¹, h ¹, z⁻¹) of the previous function (f, g, h, z), the inverse function being applied to the intermediate data earlier obtained (DI1, DI2, DI3, DI4) to obtain a result, and
- a comparison (E31, E61, E91, E121) of the result obtained with the data (DE, DI1, DI2, DI3) before the application of the previous function (f, g, h, z), wherein an attack is detected if the result obtained and said data are not identical.

4. Method according to any of the foregoing claims, wherein the step of infection (E4, E7, E10, E13) of the subsequent intermediate data (DI2, DI3, DI4) comprises a replacement of the value of the subsequent intermediate data with a random value.

5. Method according to any of the claims 1 to 3, wherein the step of infection (E4, E7, E10, E13) of the subsequent intermediate data (DI2, DI3, DI4) comprises a replacement of the value of the subsequent intermediate data with a null value.

6. Method according to any of the claims 1 to 3, wherein the step of infection (E4, E7, E10, E13) of the subsequent intermediate data (DI2, DI3, DI4) comprises an exclusive OR logical operator to be applied to the subsequent intermediate data with a random value.

7. Method according to any of the foregoing claims, wherein the step of infection (E4, E7, E10) of the subsequent intermediate data (DI2, DI3, DI4) comprises replacement of the value of the secret data to later apply to subsequent intermediate data, with a random value or a null value.

8. Method according to any of the foregoing claims, comprising an application (E11) of a dummy function to the last subsequent intermediate data (DI4), simultaneously with a last detection (E12) of an attack by analysing the accuracy of the last subsequent intermediate data.

9. Processing device implementing a method for protecting the processing (AG) of sensitive data according to any of the claims 1 to 8, intended for processing sensitive input data (DE) in order to obtain sensitive output data (DS), wherein data processing is divided into at least two processing functions (f, g), the device comprising:
- a processing entity (ET) for successively applying the processing functions from sensitive input data, and obtaining the sensitive output data after applying the last processing function, and
- a protection entity (EP) for detecting an attack simultaneously with each application of a processing function, and infecting the data resulting from the application of each processing function if an attack is detected.

## Patentansprüche

1. Verfahren zum Schutz einer Verarbeitung (AG) von sensiblen Daten, das durch eine Verarbeitungsvorrichtung (DT) implementiert ist, welche für die Verarbeitung von sensiblen Eingabedaten (DE) bestimmt ist, um sensible Ausgabedaten (DS) zu erhalten, wobei die Datenverarbeitung in wenigstens zwei Verarbeitungsfunktionen (f, g, h, z) unterteilt ist, wobei das Verfahren umfasst:
- eine Anwendung (E1) einer ersten Funktion (f) auf die sensiblen Eingabedaten (DE), um erste Zwischendaten (DI1) zu erhalten,
und ebenfalls umfassend die drei folgenden rekurrenten Schritte für jede sukzessive Anwendung jeder der folgenden Funktionen (g, h, z):
- eine Anwendung (E2, E5, E8) der subsequenten Funktion (g, h, z) auf die Zwischendaten (DI1, DI2, DI3), die zuvor durch die Anwendung einer vorherigen Funktion (f, g, h) erhalten wurde, um subsequente Zwischendaten (DI1, DI2, DI3, DI4 ) zu erhalten,
gleichzeitig mit der Anwendung der folgenden Funktion eine Feststellung (E3, E6, E9) eines Angriffs durch Überprüfung der Richtigkeit der zuvor erhaltenen Zwischendaten (DI1, DI2, DI3 und
- einer Infektion (E4, E7, E10) der subsequent erhaltenen Zwischendaten (DI2, DI3, DI4), wenn ein Angriff festgestellt wird,
die folgenden Zwischendaten, die durch Anwendung der subsequenten letzten Funktion erhalten werden, sind die sensiblen Ausgabedaten (DS) mit einem richtigen oder infizierten Wert.

2. Verfahren gemäß Anspruch 1, umfassend einen letzten Schritt (E12) der Feststellung eines Angriffs durch die Analyse der letzten erhaltenen subsequenten Zwischendaten (DI4) durch Anwendung der letzten subsequenten Funktion (z) und einer Infektion (E13) der letzten subsequenten Zwischendaten (DI4), die erhalten werden, wenn ein Angriff festgestellt wird.

3. Verfahren gemäß Anspruch 1 oder 2, bei dem der Schritt (E3, E6, E9, E12) der Erfassung eines Angriffs umfasst:
- eine Anwendung (E30, E60, E120) einer Umkehrfunktion (f⁻¹, g⁻¹, h⁻¹, z⁻¹) der vorherigen Funktion (f, g, h, z), wobei die Umkehrfunktion auf die vorherigen erhaltenen Zwischendaten (DI1, DI2, DI3, DI4) angewendet werden, um ein Ergebnis zu erhalten und
- einen Vergleich (E31, E61, E91, E121) des Ergebnisses, das mit den Daten (DE, DI1, DI2, DI3) vor der Anwendung der vorherigen Funktion (f, g, h, z) erhalten wird, bei der ein Angriff festgestellt wird, wenn das erhaltene Ergebnis und die genannten Daten nicht identisch sind.

4. Verfahren gemäß irgendeinem der voranstehenden Anspruche, bei dem der Schritt der Infektion (E4, E7, E10, E13) der subsequenten Zwischendaten (DI2, DI3, DI4) einen Ersatz des Wertes der subsequenten Zwischendaten durch einen Zufallswert umfasst.

5. Verfahren gemäß irgendeinem der Ansprüche 1 bis 3, bei dem der Schritt der Infektion (E4, E7, E10, E13) der subsequenten Zwischendaten (DI2, DI3, DI4) einen Ersatz des Wertes der subsequenten Zwischendaten durch einen Nullwert umfasst.

6. Verfahren gemäß irgendeinem der Ansprüche 1 bis 3, bei dem die Stufe der Infektion (E4, E7, E10, E13) der subsequenten Zwischendaten (DI2, DI3, DI4) einen exklusiven ODER logischen Operator umfasst, der mit einem Zufallswert auf die subsequenten Zwischendaten anzuwenden ist.

7. Verfahren gemäß irgendeinem der voranstehenden Ansprüche, bei dem die Stufe der Infektion (E4, E7, E10) der subsequenten Zwischendaten (DI2, DI3, DI4) den Ersatz des Wertes der geheimen Daten durch einen Zufallswert oder einen Nullwert zum späteren Anwenden auf die subsequenten Zwischendaten umfasst.

8. Verfahren gemäß irgendeinem der voranstehenden Ansprüche, umfassend eine Anwendung (E11) einer Dummyfunktion auf die letzten subsequenten Zwischendaten (DI4), gleichzeitig mit einer letzten Feststellung (E12) eines Angriffs durch die Analyse der Richtigkeit der letzten subsequenten Zwischendaten.

9. Verarbeitungsvorrichtung, die ein Verfahren für den Schutz der Verarbeitung (AG) von sensiblen Daten gemäß irgendeinem der Ansprüche 1 bis 8 implementiert, das für die Verarbeitung von sensiblen Eingabedaten (DE) bestimmt ist, um sensible Ausgabedaten (DS) zu erhalten, wobei die Datenverarbeitung in wenigstens zwei Verarbeitungsfunktionen (f, g) unterteilt ist, wobei die Vorrichtung umfasst:
- eine Verarbeitungseinheit (ET) für die sukzessive Anwendung der Verarbeitungsfunktionen von sensiblen Eingabedaten und den Erhalt der sensiblen Ausgabedaten nach der Anwendung der letzten Verarbeitungsfunktion, und
- eine Schutzeinheit (EP) für die Feststellung eines Angriffs gleichzeitig mit jeder Anwendung einer Verarbeitungsfunktion und der Infektion der Daten, die aus der Anwendung jeder Verarbeitungsfunktion resultiert, wenn ein Angriff festgestellt wird.

## Revendications

1. Procédé de protection d'un traitement (AG) de données sensibles implémenté par un dispositif de traitement (DT) destiné à traiter des données d'entrée sensibles (DE) afin d'obtenir des données de sortie sensibles (DS), dans lequel le traitement de données est divisé en au moins deux fonctions de traitement (f, g, h, z), le procédé comprenant :
- une application (E1) d'une première fonction (f) aux données d'entrée sensibles (DE) pour obtenir des premières données intermédiaires (DI1),
et comprenant également les trois étapes récurrentes suivantes pour chaque application successive de chacune des fonctions suivantes (g, h, z) ;
- une application (E2, E5, E8) de la fonction ultérieure (g, h, z) aux données intermédiaires (DI1, DI2, DI3) obtenues plus tôt en appliquant une fonction précédente (f, g, h), pour obtenir des données intermédiaires ultérieures (DI2, DI3, DI4),
- simultanément à l'application de la fonction suivante, une détection (E3, E6, E9) d'une attaque en vérifiant l'exactitude des données intermédiaires précédemment obtenues (DI1, DI2, DI3), et
- une infection (E4, E7, E10) des données intermédiaires obtenues ultérieurement (DI2, DI3, DI4) si une attaque est détectée,
les données intermédiaires suivantes obtenues en appliquant la dernière fonction ultérieure sont les données de sortie sensibles (DS) avec une valeur exacte ou infectée.

2. Procédé selon la revendication 1, comprenant une dernière étape (E12) de détection d'une attaque en analysant les dernières données intermédiaires ultérieures obtenues (DI4) en appliquant la dernière fonction ultérieure (z) et une infection (E13) des toutes dernières données intermédiaires ultérieures (DI4) obtenues si une attaque est détectée.

3. Procédé selon la revendication 1 ou 2, dans lequel l'étape (E3, E6, E9, E12) de détection d'une attaque comprend :
- une application (E30, E60, E90, E120) d'une fonction inverse (f⁻¹, g⁻¹, h⁻¹, z⁻¹) de la fonction précédente (f, g, h, z), la fonction inverse étant appliquée aux données intermédiaires obtenues plus tôt (DI1, DI2, DI3, DI4) pour obtenir un résultat, et
- une comparaison (E31, E61, E91, E121) du résultat obtenu aux données obtenues (DE, DI1, DI2, DI3) avant l'application de la fonction précédente (f, g, h, z), dans lequel une attaque est détectée si le résultat obtenu et lesdites données ne sont pas identiques.

4. Procédé selon l'une quelconque des revendications précédentes, dans lequel l'étape d'infection (E4, E7, E10, E13) des données intermédiaires ultérieures (DI2, DI3, DI4) comprend un remplacement de la valeur des données intermédiaires ultérieures pour une valeur aléatoire.

5. Procédé selon l'une quelconque des revendications 1 à 3, dans lequel l'étape d'infection (E4, E7, E10, E13) des données intermédiaires ultérieures (DI2, DI3, DI4) comprend un remplacement de la valeur des données intermédiaires ultérieures par une valeur nulle.

6. Procédé selon l'une quelconque des revendications 1 à 3, dans lequel l'étape d'infection (E4, E7, E10, E13) des données intermédiaires ultérieures (DI2, DI3, DI4) comprend un opérateur logique OU exclusif à appliquer aux données intermédiaires ultérieures avec une valeur aléatoire.

7. Procédé selon l'une quelconque des revendications précédentes, dans lequel l'étape d'infection (E4, E7, E10) des données intermédiaires ultérieures (DI2, DI3, DI4) comprend un remplacement de la valeur des données secrètes à appliquer plus tard à des données intermédiaires ultérieures, par une valeur aléatoire ou une valeur nulle.

8. Procédé selon l'une quelconque des revendications précédentes, comprenant une application (E11) d'une fonction factice aux dernières données intermédiaires ultérieures (DI4), simultanément à une dernière détection (E12) d'une attaque en analysant l'exactitude des dernières données intermédiaires ultérieures.

9. Dispositif de traitement implémentant un procédé de protection du traitement (AG) de données sensibles selon l'une quelconque des revendications 1 à 8, destiné à traiter des données d'entrée sensibles (DE) afin d'obtenir des données de sortie sensibles (DS), dans lequel le traitement de données est divisé en au moins deux fonctions de traitement (f, g), le dispositif comprenant :
- une entité de traitement (ET) pour appliquer successivement les fonctions de traitement de données d'entrée sensibles, et obtenir les données de sortie sensibles après application de la dernière fonction de traitement, et
- une entité de protection (EP) pour détecter une attaque simultanément à chaque application d'une fonction de traitement, et pour infecter les données résultant de l'application de chaque fonction de traitement si une attaque est détectée.
